# EUROPÄISCHE PATENTSCHRIFT

(11) **EP 1 511 659 B1**
(45) Veröffentlichungstag und Bekanntmachung des Hinweises auf die Patenterteilung: **26.10.2005**
(21) Anmeldenummer: 03735431.3
(22) Anmeldetag: 22.05.2003
(51) Int. Cl.: B60R 21/20

(54) **ELEKTRISCH ISOLIERTE BEFESTIGUNGSANORDNUNG FÜR EIN AIRBAGMODUL**
ELECTRICALLY INSULATED FIXING DEVICE FOR AN AIRBAG MODULE
SYSTEME DE FIXATION A ISOLATION ELECTRIQUE POUR MODULE DE COUSSIN GONFLABLE

(30) Priorität: 07.06.2002 DE 10225633
(43) Veröffentlichungstag der Anmeldung: 09.03.2005
(73) Patentinhaber: AUTOLIV DEVELOPMENT AB, 447 83 Vargarda (SE)
(72) Erfinder: WALLENTIN, Rainer, 85411 Hohenkammer (DE); WITTMANN, Ernst, 85241 Hebertshausen (DE)
(74) Vertreter: Müller, Karl-Ernst
(86) Internationale Anmeldenummer: PCT/EP2003/005340
(87) Internationale Veröffentlichungsnummer: WO 2003/104042

(56) Entgegenhaltungen:
- US-A- 5 239 147
- US-A- 5 645 295
- US-A- 5 803 486

## Beschreibung

Die Erfindung betrifft eine Befestigungsanordnung für ein Airbagmodul in Kraftfahrzeugen, wobei der Gasgenerator mittels wenigstens eines an ihm ausgebildeten und durch wenigstens eine Öffnung eines der Halterung des Airbagmoduls dienenden, an einem Fahrzeugteil befestigbaren Halteteils hindurchsteckbaren Stehbolzens und darauf aufgeschraubter Schraubmutter befestigbar ist.

Eine derartige Befestigungsanordnung ist für ein an einem Fahrzeugsitz befestigtes Airbagmodul in der US 5 803 486 A beschrieben, wobei an dem Gasgeneratorgehäuse Stehbolzen angebracht sind, die die Wand eines Pfostens als Teil der Sitzstruktur durchstoßen und daran mittels einer aufgeschraubten Befestigungsmutter befestigt sind. Soweit bei dieser Anwendung in dem Fahrzeugsitz noch weitere elektrisch betriebene bzw. angesteuerte Komponenten wie Gurtaufroller, Gurtstraffer oder dergleichen angeordnet und vorzugsweise an der einheitlichen Sitzstruktur befestigt sind, kann bei der bekannten Befestigungsanordnung für ein Airbagmodul das Problem auftreten, daß ausreichend starke elektrische Ströme über die Sitzstruktur und die daran befestigten Stehbolzen des Gasgenerators bis zum Gasgenerator bzw. zu dessen Zündmechanismus fließen, so daß eine Fehlauslösung des Gasgenerators nicht mit der erforderlichen Sicherung ausgeschlossen werden kann. Da derartige Fehlauslösungen zur Unzeit schwerwiegende Folgen für die Fahrzeuginsassen haben können, liegt der Erfindung die Aufgabe zugrunde, eine Befestigungsanordnung der eingangs genannten Art so auszubilden, daß eine Fehlauslösung vermieden ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß zwischen Gasgenerator und Fahrzeugteil eine elektrische Isolierung vorgesehen ist. Damit ist in vorteilhafter Weise ausgeschlossen, daß etwa entstehende elektrische Ströme über die Befestigungsanordnung bis an den Gasgenerator bzwl. dessen Zündmechanismus gelangen können; hier bildet die entsprechend vorgesehene elektrische Isolierung eine Leitungssperre.

In einer ersten Ausführungsform sieht die Erfindung zur Ausbildung der elektrischen Isolierung vor, daß eine sich wenigstens über den Kontaktbereich zwischen Gasgenerator und Halteteil erstreckende Schale aus einem elektrisch isolierenden Material angeordnet ist, die mit wenigstens einem Ansatz die Öffnung des Halteteils durchgreift und eine Isolierung zwischen dem Stehbolzen und den diesen umschließenden Öffnungsrand des Halteteils bildet, und daß zwischen der auf den Stehbolzen aufgeschraubten Schraubmutter und deren Auflagerfläche auf dem Halteteil eine Buchse aus einem elektrisch isolierenden Material angeordnet ist. Soweit die die Kontaktfläche zwischen Gasgenerator und Halteteil isolierende Schale mit einem Ansatz durch die Öffnung des Halteteils reicht, wird in vorteilhafter Weise auch der Stehbolzen gegen das Halteteil isoliert; die Isolierung der Schraubmutter gegen das Halteteil findet über die zwischengeschaltete Buchse statt.

Hierzu ist nach einem Ausführungsbeispiel ergänzend vorgesehen, daß der Ansatz der Schale einen hakenartig auf der dem Gasgenerator abgewandten Außenseite des Halteteils aufliegenden radialen Vorsprung aufweist. Vorzugsweise ist dabei vorgesehen, daß der Ansatz der Schale mit hakenartigem Vorsprung federnd ausgebildet und beim Durchstecken durch die Öffnung des Halteteils mit dem Fahrzeugteil verrastbar ist; mit einer derartigen Lösung ist eine Montageerleichterung verbunden.

Nach einem Ausführungsbeispiel sieht die Erfindung vor, daß der radiale Vorsprung des Ansatzes ein Auflager für die Buchse bildet. Alternativ kann vorgesehen sein, daß die Buchse den Vorsprung außen umgreift und mit ihrem Rand vollflächig auf dem Halteteil aufliegt, wobei die den Vorsprung umgreifende Innenfläche der Buchse und die Außenfläche des Vorsprungs als zueinander korrespondierende Schrägflächen ausgebildet sein können.

Als elektrische Isolierung findet vorzugsweise ein geeigneter Kunststoff Anwendung.

Soweit an dem Airbagmodul eine elektrostatische Aufladung eintreten kann, die sich wegen der erfindungsgemäß vorgenommenen Isolierung gegen die leitende Fahrzeugstruktur nicht mehr selbständig entladen kann, ist nach einem Ausführungsbeispiel der Erfindung vorgesehen, daß der Stehbolzen über ein Massekabel mit einem elektrisch leitenden Fahrzeugteil verbunden ist, so daß eine statische Aufladung im Bereich des Airbagmoduls ebenfalls ausgeschlossen ist.

Nach einem Ausführungsbeispiel der Erfindung ist vorgesehen, daß das der Befestigung des Airbagmoduls dienende Halteteil an der Struktur eines Fahrzeugsitzes befestigbar ist. Die Erfindung ist jedoch gleichermaßen auf Einbausituationen von Airbagmodulen anwendbar, bei denen die Airbagrnodule mit dem integrierten Halteteil an anderen Fahrzeugteilen außerhalb eines Fahrzeugsitzes, beispielsweise auch im Bereich des Armaturenbretts an elektrisch leitenden Fahrzeugteilen befestigt werden. Weiterhin ist die Erfindung nicht notwendigerweise auf die Einbeziehung eines Halteteils beschränkt, vielmehr kann auch vorgesehen sein, die Stehbolzen des Gasgenerators bzw. Gasgeneratorgehäuses unmittelbar durch in einem der Befestigung des Airbagmoduls dienenden Fahrzeugteil vorgesehene Öffnungen zu führen und die Befestigung über auf die Stehbolzen aufgeschraubte Schraubmuttern vorzunehmen, wie dies im Grundsatz in der gattungsbildenden US 5 803 486 A beschrieben ist.

In der Zeichnung ist ein Ausführungsbeispiel der Erfindung wiedergegeben, welches nachstehend beschrieben ist. Es zeigen:
- Fig. 1: ein Airbagmodul mit Halteteil in einer Schnittansicht,
- Fig. 2: die Verbindung von Gasgenerator und Halteteil in einer vergrößerten, ausschnittsweisen Darstellung.

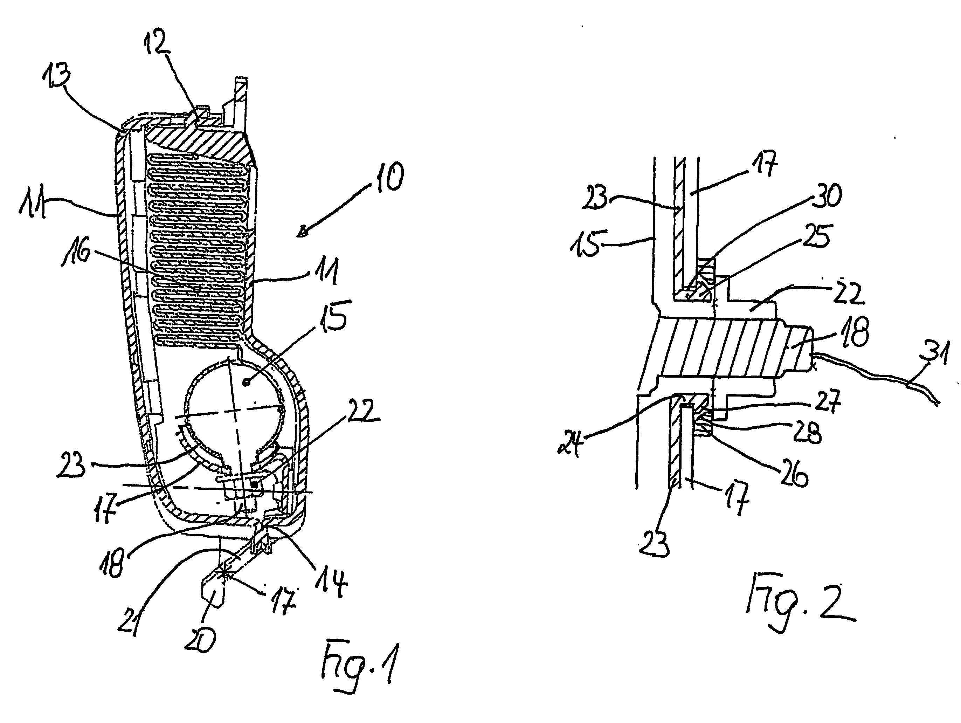

Das in Fig. 1 dargestellte Airbagmodul 10 weist zwei äußere Gehäusehälften 11 auf, die an ihrem einen Ende mittels einer Scharnierverbindung 14 und an ihrem gegenüberliegenden Ende mittels einer Schnappverbindung 12 aneinander festgelegt und zusammengehalten sind. Eine der beiden Gehäusehälften 11 ist mit einer Sollbruchstelle 13 versehen, die durch den Entfaltungsdruck des im Airbagmodul 10 angeordneten Gassacks 16 zerstört wird, so daß sich eine der Gehäusehälften 11 um die Scharnierverbindung 14 schwenkend öffnet.

Im Inneren des Airbagmoduls 10 sind ein Gasgenerator 15 und ein eingefalteter Gassack 16 angeordnet. Der Gasgenerator 15 ist mittels an ihm angeordneter und ein in das Innere des Airbagmoduls 10 reichendes Halteteil 17 durchstoßender Stehbolzen 18 dadurch befestigt, daß eine Schraubmutter 22 auf den jeweiligen Stehbolzen 18 aufgeschraubt ist. Das Halteteil 17 erstreckt sich aus dem Airbagmodul 10 heraus und ist an seinem Ende mit einem Montagehaken 20 sowie einer Befestigungsöffnung 21 versehen, so daß das Halteteil 17 mittels eines geeigneten Befestigungsmittels an einem Fahrzeugteil, beispielsweise einem Teil der Sitzstruktur wie in der gattungsbildenden US 5 803 486 A dargestellt, befestigbar ist.

Um eine elektrisch leitende Verbindung von dem Fahrzeugteil bzw. ggf. einer Sitzstruktur über das Halteteil 17 und die aus Stehbolzen 18 und Schraubmutter 22 bestehende Befestigungsanordnung für den Gasgenerator 15 bis zum Gasgenerator bzw. dessen Zündmechanismus zu verhindern, ist im Anlagebereich des Gasgenerators 15 gegen das Halteteil 17 zwischen Gasgenerator 15 und Halteteil 17 eine Schale 23 aus einem elektrisch isolierenden Material, vorzugsweise einem geeigneten Kunststoff, angeordnet, die ebenfalls den Stehbolzen 18 isoliert und durch eine zwischen Schraubmutter 22 und Halteteil 17 angeordnete Buchse ergänzt ist.

Die elektrische Isolierung im Bereich der Stehbolzen-Befestigung ist im einzelnen in Fig. 2 dargestellt. Hieraus ist ersichtlich, daß die zwischen Halteteil 17 und Gasgenerator 15 angeordnete Schale 23 mit einem den Stehbolzen 18 umschließenden Ansatz 24 die in dem Halteteil 17 ausgebildete Öffnung 30 durchstößt und auf der dem Gasgenerator 15 abgewandten Seite mit einem auswärts gerichteten radialen Vorsprung 25 das Halteteil 17 hakenartig umgreift. Mit dieser Gestaltung ist sichergestellt, daß auch die gegen den Stehbolzen 18 gerichteten Stirnseiten des Halteteils 17 im Bereich der Öffnungen 30 gegen den Stehbolzen abgeschirmt und elektrisch isoliert sind, so daß hier keine elektrisch leitende Verbindung entstehen kann.

Soweit auf den Stehbolzen 18 eine Schraubmutter 22 zu Befestigungszwecken aufgeschraubt ist, ist zusätzlich zwischen der Schraubmutter 22 und dem Halteteil 17 eine ebenfalls aus elektrisch isolierenden Material bestehende Buchse 26 angeordnet, so daß sich die Schraubmutter 22 auf der Buchse 26 abstützt und eine leitende Verbindung zwischen der Schraubmutter 22 und dem Halteteil 17 vermieden ist. Bei der in Fig. 2 dargestellten Ausführungsform ist die den Vorsprung 25 übergreifende Innenfläche 28 der Buchse 26 in gleicher Weise wie die Außenfläche 27 des Vorsprungs 25 als Schrägfläche ausgebildet, die jeweils mit der gegenüberliegenden Schrägfläche korrespondiert.

Die Anordnung von Schale 23, Ansatz 24 und Vorsprung 25 ist dabei vorzugsweise so getroffen, daß sich bei der Montage der Schale 23 an dem Halteteil 17 eine rastende Schnappverbindung zwischen Schale 23 und Halteteil 17 ergibt.

Um das Entstehen elektrostatischer Aufladungen am Gasgenerator zu vermeiden, ist der Stehbolzen 18 über ein Massekabel 31 mit einem elektrisch leitenden Fahrzeugteil verbunden, so daß hierüber die elektrische Isolierung zwischen dem Fahrzeugteil bzw. dem daran angeschlossenen Halteteil und dem Gasgenerator überbrückt ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Befestigungsanordnung für ein Airbagmodul in Kraftfahrzeugen, wobei der Gasgenerator mittels wenigstens eines an ihm ausgebildeten und durch wenigstens eine Öffnung eines der Halterung des Airbagmoduls dienenden, an einem Fahrzeugteil befestigbaren Halteteils hindurchsteckbaren Stehbolzens und darauf aufgeschraubter Schraubmutter befestigbar ist, **dadurch gekennzeichnet, daß** zwischen Gasgenerator (15) und Halteteil (17) eine elektrische Isolierung (23, 24, 26) angeordnet ist.

2. Befestigungsanordnung nach Anspruch 1, **dadurch gekennzeichnet, daß** als elektrische Isolierung eine sich wenigstens über den Kontaktbereich zwischen Gasgenerator (15) und Halteteil (17) erstreckende Schale (23) aus einem elektrisch isolierenden Material angeordnet ist, die mit wenigstens einem Ansatz (24) die Öffnung (30) des Halteteils (17) durchgreift und eine Isolierung zwischen dem Stehbolzen (18) und dem diesen umschließenden Öffnungsrand des Halteteils (17) bildet, und daß zwischen der auf den Stehbolzen (18) aufgeschraubten Schraubmutter (22) und deren Auflagerfläche auf dem Halteteil (17) eine Buchse (26) aus einem elektrisch isolierenden Material angeordnet ist.

3. Befestigungsanordnung nach Anspruch 2, **dadurch gekennzeichnet, daß** der Ansatz (24) der Schale (23) einen hakenartig auf der dem Gasgenerator abgewandten Außenseite des Halteteils (17) aufliegenden radialen Vorsprung (25) aufweist.

4. Befestigungsanordnung nach Anspruch 3, **dadurch gekennzeichnet, daß** der Ansatz (24) der Schale (23) mit hakenartigem Vorsprung (25) federnd ausgebildet und beim Durchstecken durch die Öffnung (30) des Halteteils (17) mit dem Fahrzeugteil (17) verrastbar ist.

5. Befestigungsanordnung nach Anspruch 4, **dadurch gekennzeichnet, daß** der radiale Vorsprung (25) des Ansatzes (24) ein Auflager für die Buchse (26) bildet.

6. Befestigungsanordnung nach Anspruch 4, **dadurch gekennzeichnet, daß** die Buchse (26) den Vorsprung (25) außen umgreift und mit ihrem Rand vollflächig auf dem Halteteil (17) aufliegt.

7. Befestigungsanordnung nach Anspruch 6, **dadurch gekennzeichnet, daß** die den Vorsprung (25) umgreifende Innenfläche (28) der Buchse (26) und die Außenfläche (27) des Vorsprungs (25) als zueinander korrespondierende Schrägflächen ausgebildet sind.

8. Befestigungsanordnung nach einem der Ansprüche 1 bis 7, **dadurch gekennzeichnet, daß** das elektrisch isolierende Material ein Kunststoff ist.

9. Befestigungsanordnung nach einem der Ansprüche 1 bis 8, **dadurch gekennzeichnet, daß** der Stehbolzen (18) über ein Massekabel (31) mit einem elektrisch leitenden Fahrzeugteil verbunden ist.

10. Befestigungsanordnung nach einem der Ansprüche 1 bis 9, **dadurch gekennzeichnet, daß** das der Befestigung des Airbagmoduls (10) dienende Halteteil (17) an der Struktur eines Fahrzeugsitzes befestigbar ist.

## Claims

1. Fastening arrangement for an airbag module in motor vehicles, wherein the gas generator is fastened by means of at least one stay bolt and nut screwed thereupon, the bolt being designed for the gas generator and penetrating through at least one hole of a retaining member that serves for mounting the airbag module and fastening to a vehicle part, **characterized in that** an electrical insulation (23, 24, 26) is arranged between gas generator (15) and retaining member (17).

2. Fastening arrangement according to claim 1, **characterized in that** a shell (23), which is made of an electrically insulating material and engages said hole (30) of said retaining member (17) with at least one shoulder (24) and forms an insulation between said stay bolt (18) and the hole edge of said retaining member (17), which surrounds said stay bolt, is arranged extending at least across the contact area between gas generator(15) and retaining member (17), and that a bushing (26) made of an electrically insulating material is arranged on said retaining member (17) between said nut (22) screwed on said stay bolt (18) and the bearing surface of said nut.

3. Fastening arrangement according to claim 2, **characterized in that** said shoulder (24) of said shell (23) demonstrates a hook-like radial projection (25) lying on the external side of said retaining member (17) facing away from the gas generator.

4. Fastening arrangement according to claim 3, **characterized in that** said shoulder (24) of the shell (23) having said hook-like projection (25) is designed resilient and locks with the vehicle part (17) when pushed through said hole (30) of the retaining member (17).

5. Fastening arrangement according to claim 4, **characterized in that** said radial projection (25) of said shoulder (24) forms a support for said bushing (26).

6. Fastening arrangement according to claim 4, **characterized in that** said bushing (26) engages said projection (25) externally and that its edge lies all-over on said retaining member (17).

7. Fastening arrangement according to claim 6, **characterized in that** the inner surface (28) of said bushing (26) engaging said projection (25) and the outer surface (27) of said projection (25) are designed as slanted surfaces that correspond to each other.

8. Fastening arrangement according to one of the claims 1 to 7, **characterized in that** said electrical insulating material is a plastic.

9. Fastening arrangement according to claim one of the claims 1 to 8, **characterized in that** an earth cable (31) connects said stay bolt (18) to an electrically conducting vehicle part.

10. Fastening arrangement according to claim one of the claims 1 to 9, **characterized in that** said retaining member (17) serving to fasten said airbag module (10) is fastened to the structure of a car seat.

## Revendications

1. Dispositif de fixation pour un module d'airbag dans des véhicules automobiles, le générateur de gaz pouvant être fixé au moyen d'au moins un goujon réalisé sur le générateur et pouvant passer à travers au moins une ouverture d'une partie de retenue servant à l'attache du module d'airbag et pouvant être fixée sur une partie du véhicule et au moyen d'un écrou à vis vissé dessus, **caractérisé en ce qu'**une isolation électrique (23, 24, 26) est disposée entre le générateur de gaz (15) et la partie de retenue (17).

2. Dispositif de fixation selon la revendication 1, **caractérisé en ce que**, comme isolation électrique, on dispose une coque (23) à base d'un matériau électriquement isolant s'étendant au moins sur la zone de contact entre le générateur de gaz (15) et la partie de retenue (17), qui traverse avec au moins un rebord (24) l'ouverture (30) de la partie de retenue (17) et forme une isolation entre le goujon (18) et le bord d'ouverture, entourant ce goujon, de la partie de retenue (17), et **en ce qu'**une douille (26) à base d'un matériau électriquement isolant est disposée entre l'écrou à vis (22) vissé sur le goujon (18) et sa surface d'appui sur la partie de retenue (17).

3. Dispositif de fixation selon la revendication 2, **caractérisé en ce que** le rebord (24) de la coque (23) présente une saillie (25) radiale reposant à la façon d'un crochet sur le côté extérieur, opposé au générateur de gaz, de la partie de retenue (17).

4. Dispositif de fixation selon la revendication 3, **caractérisé en ce que** le rebord (24) de la coque (23) est réalisé de façon élastique avec une saillie (25) de type crochet et peut être encliqueté avec la partie de retenue (17) lors du passage à travers l'ouverture (30) de la partie de retenue (17).

5. Dispositif de fixation selon la revendication 4, **caractérisé en ce que** la saillie (25) radiale du rebord (24) forme un appui pour la douille (26).

6. Dispositif de fixation selon la revendication 4, **caractérisé en ce que** la douille (26) entoure à l'extérieur la saillie (25) et repose avec son bord sur toute la surface sur la partie de retenue (17).

7. Dispositif de fixation selon la revendication 6, **caractérisé en ce que** la surface intérieure (28), entourant la saillie (25), de la douille (26) et la surface extérieure (27) de la saillie (25) sont conçues comme des surfaces inclinées se correspondant entre elles.

8. Dispositif de fixation selon l'une quelconque des revendications 1 à 7, **caractérisé en ce que** le matériau électriquement isolant est une matière plastique.

9. Dispositif de fixation selon l'une quelconque des revendications 1 à 8, **caractérisé en ce que** le goujon (18) est relié par un câble de mise à la masse (31) à une partie de véhicule électroconductrice.

10. Dispositif de fixation selon l'une quelconque des revendications 1 à 9, **caractérisé en ce que** la partie de retenue (17) servant à la fixation du module d'airbag (10) peut être fixée sur la structure d'un siège de véhicule.
